# EUROPEAN PATENT SPECIFICATION

(11) **EP 0 567 175 B1**
(45) Date of publication and mention of the grant of the patent: **25.11.1998**
(21) Application number: 93200880.8
(22) Date of filing: 27.03.1993
(51) Int. Cl.: G03B 42/04

(54) **Cassette for PSL radiography**
PSL Radiographie-Kassette
Cassette pour radiographie PSL

(30) Priority: 21.04.1992 EP 92201109
(43) Date of publication of application: 27.10.1993
(73) Proprietor: AGFA-GEVAERT N.V., 2640 Mortsel (BE)
(72) Inventor: Verbeke, Gentil, c/o Agfa-Gevaert N.V., B-2640 Mortsel (BE); Boeve, Gerard, c/o Agfa-Gevaert N.V., B-2640 Mortsel (BE)

(56) References cited:
- EP-A- 0 347 647
- DE-A- 1 112 887

## Description

### BACKGROUND OF THE INVENTION

### Field of the invention

The present invention relates to radiography using PSL (photo-stimulable luminescence), and more particularly to cassettes used in such radiography.

### Description of the prior art

In conventional radiography ("X-ray photography"), a plate is made by forming one or more silver halide emulsion layers on a flexible film base which is supported within a light-tight cassette. The interior of the cassette is coated with one or more X-ray sensitive luminescent layers. The cassette containing an unexposed X-ray film plate is loaded into an X-ray machine, and after exposure the cassette and exposed X-ray film plate are removed for development and fixing of the latent image produced. This is usually done automatically by feeding the cassette into a light-tight apparatus in which the cassette is opened, the exposed film plate is extracted and chemically processed and a new, unexposed film plate is loaded into the cassette which is then re-closed, the reloaded cassette and developed film plate being delivered to respective exit slots of the processing apparatus.

In the PSL system, a PSL X-ray plate has applied thereto a layer of a photostimulable luminescent material which comprises a phosphor, for example a europium-activated barium fluorohalide, and a binder. The phosphor has the characteristic that it can be energised to a metastable excited state by X-rays, and can then be stimulated by visible or infrared light to return to the ground state with the emission of visible light (of a different wavelength from the stimulating light). The excited state has a half-life of at least several hours or days in the absence of stimulating light. A PSL plate is potentially re-usable many times. The technique is described in an article by Sonoda et al. in Radiology, Volume 148 (September 1983), at pages 833 to 838, and it offers the potential advantages of better image resolution at lower X-ray dosages for the patient.

The phosphor is deposited as a layer on a flexible base which also requires enclosure in a light-tight cassette.

Current practice in PSL radiography is to pass the exposed PSL plate in its cassette to an automatic processing machine in which the PSL plate is removed from the cassette, scanned, exposed overall to light to return the PSL material to its ground state and then reloaded into a cassette for reuse. For scanning, the exposed PSL plate is transported past a laser, typically a helium-neon laser emitting at a wavelength of 633 nm, which scans line-wise across the plate in front of a light-guide comprising a bundle of optical fibres whose input ends are arranged in a line across the path of the plate close to the laser scanning line for the reception of light emitted, typically at wavelengths close to 400 nm, when the PSL material is stimulated by the laser. The light-guide is arranged to pass the emitted light to a photomultiplier tube or other receptor. The result is a storable electronic raster image. The electronic image may be subjected to any desired computer image-enhancement techniques and it may be displayed on a video display unit, fed to a laser printer for the production of a plain paper copy, or used to control a laser arranged to write to a photographic film plate to produce an X-ray plate of conventional appearance.

The cassettes used in PSL radiography must have external dimensions which are compatible with those of conventional X-ray photography cassettes so that the PSL cassettes can be exposed in the cassette holder of a conventional X-ray machine. This is not, of course, to imply that all radiography cassettes are of the same size: they are not, they vary in size from about A5 paper size suitable for wrist X-rays to about A2 for chest X-rays and even larger. In fact, the practice has developed of depositing the phosphor layer on a conventional X-ray film base and of exposing it in a conventional X-ray photography cassette which is modified only in that it does not contain any X-ray sensitive luminescent layer.

Thus currently used PSL cassettes have not been designed with the specific task of PSL radiography in mind, and they suffer from a number of disadvantages which will be adverted to later in this specification.

### DESCRIPTION OF THE INVENTION

### Object of the Invention

It is an object of this invention to provide a PSL cassette in which at least some of the disadvantages of currently used PSL cassettes are alleviated or avoided.

### Summary of the Invention

According to this invention, there is provided a cassette for photo-stimulable luminescence ("PSL") radiography, as defined in Claim 1.

A PSL cassette according to the invention offers a number of very important advantages over the use of a conventional PSL cassette which contains a separate flexible PSL plate. The flexible plate of a conventional PSL cassette will inevitably in use undergo flexure. As a result the layer of PSL material will be stressed. This will inevitably lead to breakdown of the PSL material.

In a conventional PSL cassette, it is possible to prolong the life of the PSL material by a suitable choice of binder for the phosphor and by increasing the proportion of binder in the PSL material. But if the proportion of binder is increased, the proportion of phosphor will be reduced so resolution will also be reduced. It might be possible to make some gain in resolution by making the PSL material thicker, but it will be appreciated that increasing the thickness of a PSL layer will lead to an increase in scattering which is a further cause of loss of resolution. These problems do not arise in a PSL cassette according to the invention. Because the PSL material is held on a flat and substantially rigid plate it will not be stressed in that way. It will therefore have a longer useful service life. Also, and at least as importantly, because the layer of PSL material is not stressed in that way, it can be made thinner, and with a higher proportion of phosphor to binder, without any substantial deleterious effect on its service life, thus leading to a significant potential increase in resolution.

A PSL cassette according to the invention offers further advantages. Because a conventional PSL plate is flexible, it requires to be held flat after removal from its cassette for transport through a scanner and this may imply that both faces of such a plate require to be contacted, for example by transport rollers, and this or any other contact with the coated face of the plate will involve a risk that the PSL layer will become scratched. This disadvantage too is alleviated by the adoption of this invention. Because the PSL plate of the cassette of the invention is flat and rigid, it can readily be transported through a scanner without any contact between parts of the scanner transport system and the PSL layer. Such transport could for example be effected by rollers bearing on the edge faces of the plate. A further advantage of using a flat and rigid PSL plate is that the light-guide of the scanner apparatus can be located closer to the path of the plate while still giving a reliable clearance for the passage of the plate without any contact between the plate and the light-guide. A small, but nevertheless reliable, clearance between the plate and the light-guide promotes the efficiency and resolution with which light emitted by the PSL material is collected.

A cassette in which the PSL material is directly applied to one part of a cassette, and thus disadvantages inherent to the use of a separate flexible plate are avoided, is disclosed in EP A1 0 347 647. A cassette in accordance with this disclosure has the disadvantage that the PSL material is fitted to a flexible support whereby it is liable to stresses as hereinbefore described.

Another cassette in which an X-ray sensitive material is applied to one part of the cassette is disclosed in DE-B-1 112 887 which shows a cassette with either a rigid hinging cover or a flexible removable cover, both covers being urged in contact with the sensitive material by magnetic attraction forces. A hinging cover and a flexible cover both have a common disadvantage, viz. they require a relatively large space for removal of the cover to an extent such that the X-ray plate may be conveniently stimulated and read-out.

The bevelling of the edge faces of the base may be relatively slight, so that they make an angle in the region of 100° to the coated surface. The purpose of this bevelling is to facilitate the re-uniting of the cap and base plate after they have been separated and the PSL coating on the base has been scanned and erased (by exposure to flooding light, e.g. from fluorescent tubes). If there is a slight misalignment of the cap and the base plate, this will be automatically corrected as the top surface of the base enters the open face of the cap and one or other edge of the base contacts the corresponding side of the cap, with a self-centring effect. This allows the tolerances of the transport mechanisms in the scanner to be less stringent. Advantageously, the edge faces of the base plate are substantially flat. For a given angle of bevel, this increases permissible tolerances which will still allow self-centring, and it is also very simple to form the base in this way.

Preferably, edge faces of the base plate are coated with opaque flock. This helps to promote light-tightness of the cassette.

The base plate may be manufactured from any suitable material, but it is advantageously of sandwich construction comprising a pair of sheets with a cellular layer bonded between them. Such materials are already available commercially and are inexpensive. They combine low mass with a high degree of flatness and rigidity, and they are easy to machine to size and shape. The central cellular layer may for example be of a rigid polyurethane foam material while the pair of sandwiching sheets are of glass fibre reinforced plastics material. Base plates for a PSL cassette in accordance with this invention may easily be cut to size from sheets of such material. The foam layer which might otherwise be exposed at the edge faces of such base plates may be covered in flock as aforesaid, for the dual purposes of promoting light-tightness and affording a neat appearance to those edge faces.

Preferably, the cap is made of black plastics material such as polyethylene or polyvinyl chloride. Such materials are light-tight, and easily mouldable to form caps for PSL cassettes in accordance with this invention while also being tough and hard-wearing so that they can protect the layer of PSL material, without being so hard that there is a serious risk of damage to the layer of PSL material caused by pressing the cap and base plate together.

In some preferred embodiments of the invention, said cap includes a top plate which is lined with a cushion. The provision of such a cushion, which suitably comprises a layer of soft foam material faced with a thin soft plastics film, is of further assistance in avoiding damage to the PSL material, and is especially suitable for use in portable X-ray machines and in other instances where a patient may be required to lie directly on top of the cassette.

In a cassette according to the present invention, the base plate may have a periphral heel protruduing from the bottom end of the base plate in a plane parallel to that of the bottom face of the plate. Suitably, such heel protrudes over a distance such that its outer edge coincides generally with the lower edge of the peripheral flange of the cap.

Advantageously, the base plate carries a programmable erasable memory chip. Various kinds of data may be entered on such a memory chip, for example patient identification data such as name and date of birth, and data relating to the exposure used and/or to any signal processing. The use of such a memory chip, for example a so-called electrically erasable programmable read only memory (EEPROM) and its advantages are known from conventional radiography (X-ray photography), but in that case, and also in the case of previously known PSL cassettes, the memory chip has had to be incorporated in the cassette which is separable from the X-ray sensitive image recording material. The separation of the cassette cover bearing such data from the X-ray plate which takes place during processing of such known cassettes inevitably gives rise to the possibility that data relating to one patient may become associated with the X-ray plate of another patient. Incorporating the memory chip in the base plate of a cassette according to such preferred embodiments of the present invention has the further advantage that the memory chip is at no stage in the processing detached from the X-ray sensitive layer thus avoiding the possibility of confusing data in that way.

### Brief Description of the Drawings

A PSL cassette embodying the present invention will now be described, by way of example, with reference to the drawings, in which:
Fig. 1 is a sectional view of the base plate and cap in engagement,
Fig. 2 is a sectional view of the base plate and cap disengaged, and
Fig. 3 is an enlarged view of a modification of detail 3 of Fig.2.

### Detailed Description of an Embodiment of the Invention

Referring to the drawings, the cassette consists of a base plate 10 and a cap 20. The base plate 10 has a coating 11 of PSL material on its upper surface and its edge faces have a slight bevel indicated at 12. The cap 20 has a top plate 21 with a peripheral flange forming sides 22 projecting downwards from the top plate so as to fit the base 10 closely, the sides 22 having a bevel conforming to that of the edge faces of the base 10.

Latching mechanisms are located at suitable points around the edge faces of the base and cap, e.g. towards the ends of a pair of opposite edge faces. Each latching mechanism comprises a captive pin 13 and spring 14 located in a hole 15 in the edge of the base, and a matching hole 23 in the side of the cap. The pin 13 projects beyond the edge of the base by only a small distance and itself has a bevelled end, so that when the cap 20 is pressed down onto the base, the pin 13 is pressed in until the hole 23 of the cap is opposite the pin, whereupon the pin springs out again into the hole to hold the cap on the base.

The edge faces 28 of the base 10 and/or the inside surfaces of the sides 22 of the cap 20 are coated with black flock material 16 to assist in preventing light from reaching the PSL layer 11 when the base and cap are engaged. (Such light would tend to discharge the energisation of the PSL material and so bleach the stored image.) The flock material can conveniently be applied by electrostatic spraying.

The base plate 10 carries a programmable erasable memory chip 17, for example a so-called electrically erasable programmable read only memory (EEPROM). Various kinds of data may be entered on such a memory chip, for example patient identification data, such as name and date of birth, data relating to the exposure used and/or to any signal processing, and an indication of the number of times the PSL material carried by that base plate 10 has been exposed in an X-ray machine.

The cap 20 may have a ridge (not shown) formed around the border of its inside top surface, adjacent to the sides 22, to provide a slight spacing between that inside top surface and the PSL coating on the base 10. However, this inside surface of the top plate 21 is preferably lined with a cushion 25 which suitably comprises a layer of soft foam material faced with a thin soft plastics film. These measures will help to minimise wear and abrasion of the PSL layer 11.

The cap 20 is readily disengageable from the base plate 10 by pressing in the spring-loaded pins 13.

A scanner machine for scanning the present PSL cassette is described in copending application N° 92 201 110.1 in our name, entitled "Scanner for PSL radiographic cassettes", filed on April 4, 1992.

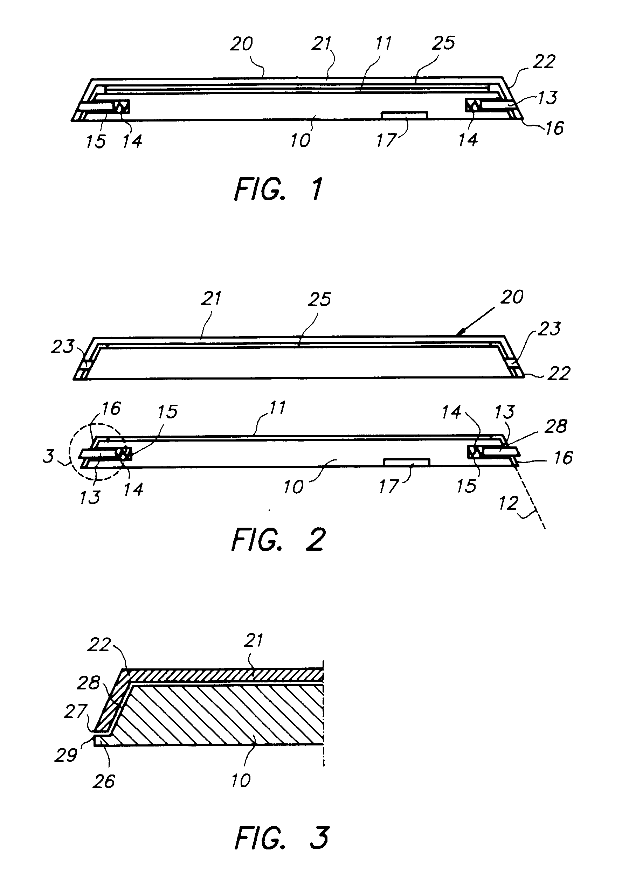

Fig. 3 shows an improved feature of the described cassette. This figure is an enlargment of detail 3 of Fig. 2 (the locking mechanism being omitted). The base plate 10 is provided with a peripheral heel 25 protruding from the base and extending outwardly, its outer edge 29 coinciding practically with the outer edge 27 of the peripheral flange of the cap 21. This feature has the advantage that if the cassette is taken up by the operator from a desk or the like the operator's fingers do not pull on the lower edge of the cap but instead on the peripheral rim of the base plate. The described feature is particular important if a plurality of cassettes are stacked onto each other, the increased mass causing an excessive loading and occasional distorsion of the slanting sides of the lowest cassette if engaged to lift the stack.

The base plate 10 and the cap may be releasably secured together in other ways than by means of the described locking pins 13 and holes 23.

For instance, patches of a fastener of the burr-and-nap type such as that widely sold under the Trade Mark Velcro may be applied respectively to the base and cap.

Alternatively, co-operating patches comprising a plurality of inter-engaging elements of a nail-like shape may be used. Suchlike patches are sold under the Trade Mark Dual Lock, manufactured by 3M.

## Claims

1. A cassette for photo-stimulable luminescence radiography, which comprises a flat substantially rigid base plate (10) and a cap (20) for the base plate (10) which is releasably securable to the base plate (10) so as to light-tightly cover a layer of photo-stimulable luminescence material (11) applied to an upper surface of the base plate (10) characterised in that :
- said cap is rigid and has a top plate (21) and a peripheral flange (22) projecting downwardly from said top plate, so as to surround and substantially conform to edge faces of the base plate (10),
- said base plate has a peripheral heel (26) protruding from the bottom end of the base plate (10) in a plane parallel to that of the bottom surface of the base plate, and protruding outwardly from said edges over a distance such that its outer edge (29) coincides generally with the outer edge (27) of the peripheral flange (22) of the cap,
- the edge faces (28) of the base plate (10) at least partially slope inwardly from said peripheral heel (26) towards the surface bearing the layer of photo-stimulable luminescence material (11) and the peripheral flange (22) of the cap (20) correspondingly slopes outwardly from said top plate (21), and
- said edge faces of the said base plate (10) carry spring catches (13, 14) which are releasably engageable with formations (23) on said cap (20) for securing the cap to the base (10).

2. A cassette according to claim 1, wherein edge faces (28) of the base plate (10) are coated with opaque flock (16).

3. A cassette according to claim 1 or 2, wherein the base plate (10) is of sandwich construction comprising a pair of sheets with cellular layer bonded between them.

4. A cassette according to any of claims 1 to 3, wherein the cap (20) is made of black plastics material such as polyethylene or polyvinylchloride.

5. A cassette according to any of claims 1 to 4, wherein said top plate of said cap (20) is lined with a cushion (25).

6. A cassettc according to any preceding claim, wherein said base plate (10) carries a programmable erasable memory chip (17).

## Patentansprüche

1. Kassette für photostimulierbare Lumineszenzradiographie, die eine flache, im wesentlichen starre Bodenplatte (10) und eine Kappe (20) für die Bodenplatte (10) umfaßt, die sich lösbar an der Bodenplatte (10) befestigen läßt, um eine auf eine obere Seite der Bodenplatte (10) aufgetragene Schicht aus photostimulierbarem Lumineszenzmaterial (11) lichtdicht abzudecken, dadurch gekennzeichnet, daß:
- die Kappe starr ist und eine obere Platte (21) und einen peripheren Flansch (22), der von der oberen Platte nach unten vorsteht, um die Randflächen der Bodenplatte (10) zu umgeben und im wesentlichen die gleiche Form aufzuweisen,
- wobei die Bodenplatte eine periphere Ferse (26) aufweist, die vom unteren Ende der Bodenplatte (10) in einer Ebene parallel zu der der unteren Fläche der Bodenplatte vorsteht und von den Rändern nach außen um eine Entfernung vorsteht, so daß ihr Außenrand (29) allgemein mit dem Außenrand (27) des peripheren Flansches (22) der Kappe zusammenfällt,
- die Randflächen (28) der Bodenplatte (10) von der peripheren Ferse (26) aus mindestens teilweise nach innen in Richtung der die Schicht aus photostimulierbarem Lumineszenzmaterial (11) tragenden Fläche abfallen und der periphere Flansch (22) der Kappe (20) von der oberen Platte (21) aus entsprechend nach außen abfällt und
- die Randflächen der Bodenplatte (10) Federklinken (13, 14) tragen, die mit Ausformungen (23) an der Kappe (20) lösbar in Eingriff gebracht werden können, um die Kappe an dem Boden (10) zu befestigen.

2. Kassette nach Anspruch 1, bei der Randflächen (28) der Bodenplatte (10) mit undurchsichtigem Beflockmaterial (16) beschichtet sind.

3. Kassette nach Anspruch 1 oder 2, bei der die Bodenplatte (10) einen schichförmigen Aufbau aufweist und ein Paar Tafeln mit dazwischen gebondeter zellenförmiger Schicht umfaßt.

4. Kassette nach einem der Ansprüche 1 bis 3, bei der die Kappe (20) aus einem schwarzem Kunststoffmaterial wie beispielsweise Polyethylen oder Polyvinylchlorid hergestellt ist.

5. Kassette nach einem der Ansprüche 1 bis 4, bei der die obere Platte der Kappe (20) mit einem Kissen (25) ausgekleidet ist.

6. Kassette nach einem der vorhergehenden Ansprüche, bei der die Bodenplatte (10) einen programmierbaren löschbaren Speicherbaustein (17) trägt.

## Revendications

1. Cassette pour radiographie à luminescence photostimulable, comprenant une plaque de base (10) plate substantiellement rigide et un couvercle (20) pour la plaque de base (10) pouvant être fixé de manière détachable à la plaque de base (10) de façon à recouvrir de manière étanche à la lumière une couche de substance (11) à luminescence photostimulable, appliquée sur une surface supérieure de la plaque de base (10), caractérisée en ce que:
- ledit couvercle est rigide et possède une plaque supérieure (21) et un rebord périphérique (22) faisant saillie vers le bas depuis ladite plaque supérieure, de façon à entourer et à épouser substantiellement les faces de bord de la plaque de base (10),
- ladite plaque de base possède un talon périphérique (26) dépassant de l'extrémité de dessous de la plaque de base (10) dans un plan parallèle à celui de la surface de dessous de la plaque de base, et dépassant vers l'extérieur desdits bords d'une distance telle que son bord extérieur (29) coïncide généralement avec le bord extérieur (27) du rebord périphérique (22) du couvercle,
- les faces de bord (28) de la plaque de base (10) sont inclinées, au moins partiellement, vers l'intérieur depuis ledit talon périphérique (26), en direction de la surface portant la couche de substance (11) à luminescence photostimulable et le rebord périphérique (22) du couvercle (20) est incliné, de manière correspondance, vers l'extérieur depuis ladite plaque supérieure (21), et
- lesdites faces de bord de ladite plaque de base (10) portent des cliquets à ressort (13, 14) pouvant s'engager de manière détachable avec des structures (23) sur ledit couvercle (20) pour fixer le couvercle à la base (10).

2. Cassette selon la revendication 1, dans laquelle les faces de bord (28) de la plaque de base (10) sont revêtues d'un flocage opaque (16).

3. Cassette selon la revendication 1 ou 2, dans laquelle la plaque de base (10) présente une configuration en sandwich, comprenant une paire de feuilles entre lesquelles est collée une couche cellulaire.

4. Cassette selon l'une quelconque des revendications 1 à 3, dans laquelle le couvercle (20) est constitué de matière plastique noire telle que le polyéthylène ou le polychlorure de vinyle.

5. Cassette selon l'une quelconque des revendications 1 à 4, dans laquelle ladite plaque supérieure dudit couvercle (20) est garnie d'un coussin amortisseur (25).

6. Cassette selon l'une quelconque des revendications précédentes, dans laquelle ladite plaque de base (10) porte une puce à mémoire programmable effaçable (17).
